# EUROPEAN PATENT APPLICATION

(11) **EP 4 546 956 A1**
(43) Date of publication of application: **30.04.2025**
(21) Application number: 23863555.1
(22) Date of filing: 08.09.2023
(51) Int. Cl.: H05K 5/00, H05K 5/06, C09B 61/00, C09K 3/00, A61K 8/19, H05K 5/04, C01G 25/02, C01G 9/02, C01G 23/047

(54) **HOUSING, ELECTRONIC DEVICE COMPRISING HOUSING, AND METHOD FOR MANUFACTURING HOUSING**

(30) Priority: 08.09.2022 KR 20220113928; 19.10.2022 KR 20220135162
(71) Applicant: Samsung Electronics Co., Ltd., Suwon-si, Gyeonggi-do 16677 (KR)
(72) Inventor: KIM, Goeun, Suwon-si Gyeonggi-do 16677 (KR); KIM, Inkyu, Suwon-si Gyeonggi-do 16677 (KR); KIM, Hyunsoo, Suwon-si Gyeonggi-do 16677 (KR); PARK, Hyesun, Suwon-si Gyeonggi-do 16677 (KR); LEE, Heesung, Suwon-si Gyeonggi-do 16677 (KR); HEO, Sungyoung, Suwon-si Gyeonggi-do 16677 (KR); SASAKI, Katsuhiko, Suwon-si Gyeonggi-do 16677 (KR); JUNG, Youngsoo, Suwon-si Gyeonggi-do 16677 (KR); CHOI, Hyunsuk, Suwon-si Gyeonggi-do 16677 (KR)
(74) Representative: HGF
(86) International application number: PCT/KR2023/013510
(87) International publication number: WO 2024/054091

(57) **Abstract**

A housing may be provided. The housing may comprise: a metal member comprising a metal material and an oxide film in which voids are formed; a dye disposed within the voids; an ultraviolet-blocking agent which comprises an ultraviolet-blocking material and is disposed within the voids; and a sealing layer which is positioned on top of the oxide film and covers the voids. The voids may comprise a first region positioned below the sealing layer and a second region positioned below the first region. The ratio of the ultraviolet-blocking agent to the dye in the first region may be greater than the ratio of the ultraviolet-blocking agent to the dye in the second region.

## Description

### [Technical Field]

The disclosure relates to a housing, an electronic device including the housing, and a method for manufacturing the housing.

### [Background Art]

With the development of information and communication technology and semiconductor technology, various functions are being integrated into one portable electronic device. For example, an electronic device may implement not only communication functions but also entertainment functions, such as playing games, multimedia functions, such as playing music and videos, communication and security functions for mobile banking, and scheduling and e-wallet functions. These electronic devices have been downsized to be conveniently carried by users.

As a recent trend is stressing making portable electronic devices small, slim, and portable, ongoing research efforts are being made to giving a more aesthetic look to the electronic device.

### [Disclosure of Invention]

### [Solution to Problems]

According to an example embodiment of the disclosure, a housing may comprise: a metal member comprising a metal material including an oxide film having a void, a dye disposed in the void, an ultraviolet (UV) blocker comprising a UV blocking material disposed in the void, and a sealing layer positioned on the oxide film. The void may include a first area positioned under the sealing layer and a second area positioned under the first area. A ratio of the UV blocker to the dye in the first area may be greater than a ratio of the UV blocker to the dye in the second area.

According to an example embodiment of the disclosure, an electronic device may comprise: a housing and a processor positioned in the housing. The housing may include: a metal member comprising a metal material including an oxide film having a void, a dye disposed in the void and an ultraviolet (UV) blocker comprising a UV blocking material disposed in the void. The void may include a first area adjacent to a surface of the housing and a second area positioned under the first area. A ratio of the UV blocker to the dye in the first area may be greater than a ratio of the UV blocker to the dye in the second area.

According to an example embodiment of the disclosure, a method for manufacturing a housing may comprise: preparing a metal member comprising a metal material having an oxide film, applying a dye to the oxide film, applying an ultraviolet (UV) blocker comprising a UV blocking material having a concentration in a range of 1ng/ml to 500ng/ml to the oxide film, and forming a sealing layer on the oxide film.

### [Brief Description of Drawings]

The above and other aspects, features and advantages of certain embodiments of the present disclosure will be more apparent from the following detailed description, taken in conjunction with the accompanying drawings, in which:
FIG. 1 is a block diagram illustrating an example electronic device in a network environment according to various embodiments;
FIG. 2 is a front perspective view illustrating an electronic device according to various embodiments;
FIG. 3 is a rear perspective view illustrating an electronic device according to various embodiments;
FIG. 4 is an exploded perspective view illustrating an electronic device according to various embodiments;
FIG. 5 is an enlarged perspective view illustrating a portion of a housing according to various embodiments;
FIG. 6 is a diagram illustrating an example structure of a housing according to various embodiments;
FIG. 7 is a diagram illustrating an example structure of a housing according to various embodiments;
FIG. 8 is a graph illustrating the concentration of a UV blocking agent changed depending on the position according to various embodiments;
FIGS. 9A and 9B are diagrams illustrating a result of UV verification of a housing according to various embodiments; and
FIG. 10 is a flowchart illustrating an example method for manufacturing a housing according to various embodiments.

### [Mode for the Invention]

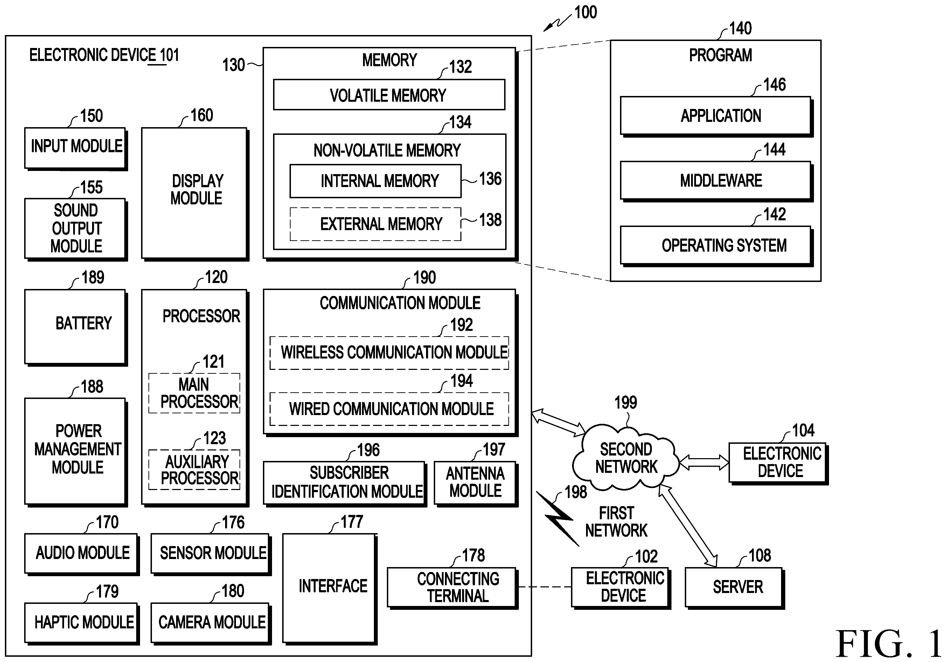

FIG. 1 is a block diagram illustrating an example electronic device in a network environment according to various embodiments.

Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module may include an antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, a home appliance, or the like. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), the element may be coupled with the other element directly (e.g., wiredly), wirelessly, or via a third element.

As used herein, the term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in the form of an application-specific integrated circuit (ASIC).

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

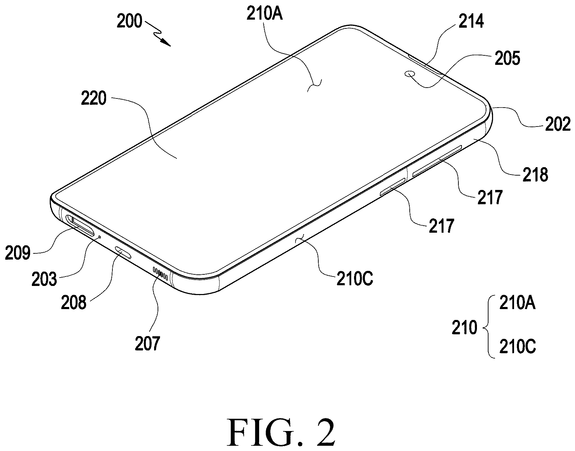

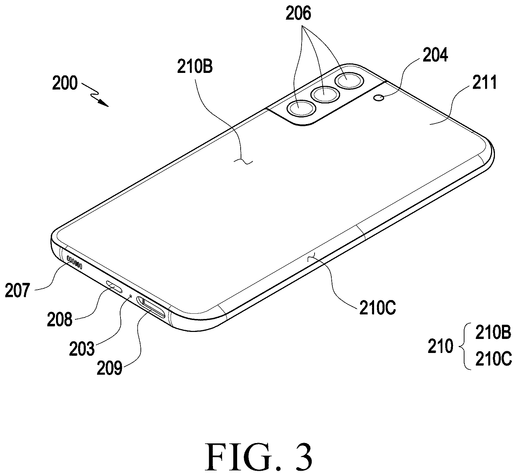

FIG. 2 is a front perspective view illustrating an electronic device according to various embodiments. FIG. 3 is a rear perspective view illustrating an electronic device according to various embodiments.

Referring to FIGS. 2 and 3, according to an embodiment, an electronic device 200 may include a housing 210 with a front surface 210A, a rear surface 210B, and a side surface 210C surrounding a space between the front surface 210A and the rear surface 210B. According to an embodiment (not shown), the housing 210 may refer, for example, to a structure forming part of the front surface 210A, the rear surface 210B, and the side surface 210C of FIG. 2. For example, the housing 210 may include a front plate 202 and a rear plate 211. According to an embodiment, at least part of the front surface 210A may have a substantially transparent front plate 202 (e.g., a glass plate or polymer plate including various coat layers). The rear surface 210B may be formed by a rear plate 211. The rear plate 211 may be formed of, e.g., glass, ceramic, polymer, metal (e.g., titanium (Ti), stainless steel (STS), aluminum (Al), or magnesium (Mg)), or a combination of at least two thereof. The side surface 210C may be formed by a side bezel structure (or a "side member") 218 that couples to the front plate 202 and the rear plate 211 and includes a metal and/or polymer. According to an embodiment, the rear plate 211 and the side bezel plate 218 may be integrally formed together and include the same material (e.g., glass, metal, such as aluminum, or ceramic). According to an embodiment, the front surface 210A and/or the front plate 202 may be interpreted as a part of the display 220.

According to an embodiment, the electronic device 200 may include at least one of a display 220, audio modules 203, 207, and 214 (e.g., the audio module 170 of FIG. 1), a sensor module (e.g., the sensor module of FIG. 1). 176), camera modules 205 and 206 (e.g., the camera module 180 of FIG. 1), a key input device 217 (e.g., the input module 150 of FIG. 1), and connector holes 208 and 209 (e.g., the connection terminal 178 of FIG. 1). According to an embodiment, the electronic device 200 may exclude at least one (e.g., the connector hole 209) of the components or may add other components. According to an embodiment, the display 220 may be visually revealed through, e.g., a majority portion of the front plate 202.

According to an embodiment, the surface (or the front plate 202) of the housing 210 may include a screen display area formed as the display 220 is visually exposed (e.g., visible). For example, the screen display area may include the front surface 210A.

According to an embodiment, the electronic device 200 may include a recess or opening formed in a portion of the screen display area (e.g., the front surface 210A) of the display 220 and may include at least one or more of an audio module 214, a sensor module (not shown), a light emitting device (not shown), and a camera module 205 aligned with the recess or opening. According to an embodiment (not shown), at least one or more of the audio module 214, sensor module (not shown), camera module 205, fingerprint sensor (not shown), and light emitting device (not shown) may be included on the rear surface of the screen display area of the display 220.

According to an embodiment, the display 220 may be coupled with or disposed adjacent to a touch detection circuit, a pressure sensor capable of measuring the strength (pressure) of touches, and/or a digitizer for detecting a magnetic field-type stylus pen.

According to an embodiment, the audio modules 203, 207, and 214 may include, e.g., a microphone hole 203 and speaker holes 207 and 214. A microphone for acquiring external sounds may be disposed in the microphone hole 203. In an embodiment, a plurality of microphones may be disposed to detect the direction of the sound. The speaker holes 207 and 214 may include an external speaker hole 207 and a phone receiver hole 214. According to an embodiment, the speaker holes 207 and 214 and the microphone hole 203 may be implemented as a single hole, or speakers may be included without the speaker holes 207 and 214 (e.g., piezo speakers).

According to an embodiment, the sensor modules (not shown) may generate an electrical signal or data value corresponding to an internal operating state or external environmental state of the electronic device 200. The sensor module (not shown) may include, e.g., a first sensor module (not shown) (e.g., a proximity sensor) and/or a second sensor module (not shown) (e.g., a fingerprint sensor) disposed on the front surface 210A of the housing 210. The sensor module (not shown) may include a third sensor module (not shown) (e.g., an HRM sensor) and/or a fourth sensor module (not shown) (e.g., a fingerprint sensor) disposed on the rear surface 210B of the housing 210). In an embodiment (not shown), the fingerprint sensor may be disposed on the rear surface 210B as well as on the front surface 210A (e.g., the display 220) of the housing 210. The electronic device 200 may further include sensor modules not shown, e.g., at least one of a gesture sensor, a gyro sensor, an atmospheric pressure sensor, a magnetic sensor, an acceleration sensor, a grip sensor, a color sensor, an infrared (IR) sensor, a biometric sensor, a temperature sensor, a humidity sensor, or an illuminance sensor (not shown).

According to an embodiment, the camera modules 205 and 206 may include a front camera module 205 disposed on the first surface 210A of the electronic device 200 and a rear camera module 206 and/or a flash 204 disposed on the rear surface 210B. The camera modules 205 and 206 may include one or more lenses, an image sensor, and/or an image signal processor. The flash 204 may include, e.g., a light emitting diode (LED) or a xenon lamp. In an embodiment, two or more lenses (an infrared (IR) camera, a wide-angle lens, and a telephoto lens) and image sensors may be disposed on one surface of the electronic device 200.

According to an embodiment, the key input device 217 may be disposed on the side surface 210C of the housing 210. According to an embodiment, the electronic device 200 may exclude all or some of the above-mentioned key input devices 217 and the excluded key input devices 217 may be implemented in other forms, e.g., as soft keys, on the display 220. According to an embodiment, at least a portion of the key input device 217 may be disposed on the side bezel structure 218.

According to an embodiment, the light emitting device may be disposed on, e.g., the front surface 210A of the housing 210. The light emitting device (not shown) may provide, e.g., information about the state of the electronic device 200 in the form of light. According to an embodiment, the light emitting device (not shown) may provide a light source that interacts with, e.g., the front camera module 205. The light emitting device (not shown) may include, e.g., a light emitting diode (LED), an infrared (IR) LED, and/or a xenon lamp.

According to an embodiment, the connector holes 208 and 209 may include a first connector hole 208 for receiving a connector (e.g., an earphone jack) for transmitting/receiving audio signals to/from an external electronic device or a connector (e.g., a USB connector) for transmitting/receiving power and/or data to/from the external electronic device and/or a second connector hole 209 for receiving a storage device (e.g., a subscriber identification module (SIM) card). According to an embodiment, the first connector hole 208 and/or the second connector hole 209 may be omitted.

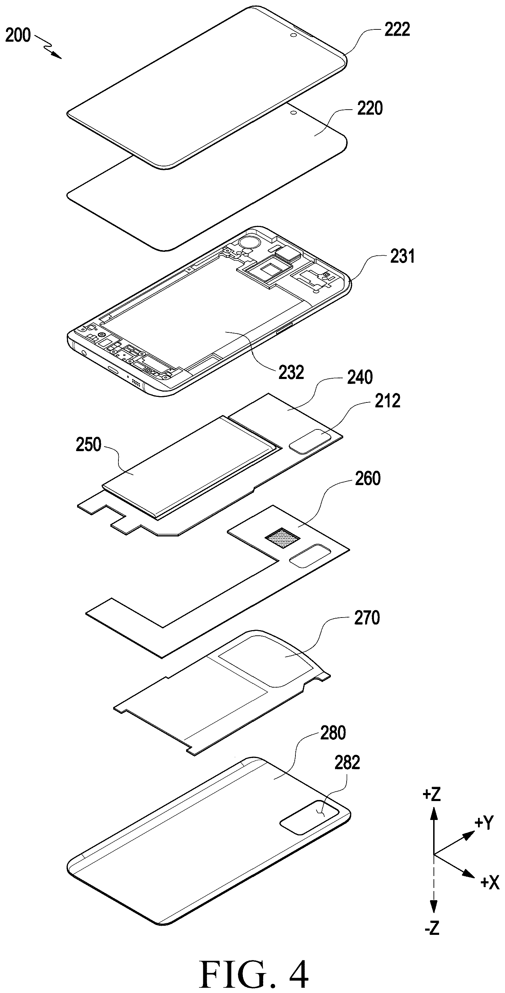

FIG. 4 is an exploded perspective view illustrating an electronic device according to various embodiments.

Referring to FIG. 4, an electronic device 200 (e.g., the electronic device 200 of FIGS. 2 and 3) may include at least one of a front plate 222 (e.g., the front plate 202 of FIG. 2), a display 220. (e.g., the display 220 of FIG. 2), a bracket 232 (e.g., a front supporting member), a printed circuit board 240, a battery 250, a rear case 260 (e.g., a rear supporting member), an antenna 270, and a rear plate 280 (e.g., the rear plate 211 of FIG. 3). According to an embodiment, the electronic device 200 may omit at least one (e.g., the rear case 260) of the components or may add other components. At least one of the components of the electronic device 200 may be the same or similar to at least one of the components of the electronic device 200 of FIG. 2 or 3 and no duplicate description is made below.

According to an embodiment, the bracket 232 may be disposed inside the electronic device 200 to be connected with the side bezel structure 231 or integrated with the side bezel structure 231. The bracket 232 may be formed of, e.g., a metal and/or non-metallic material (e.g., polymer). The bracket 232 may receive the display 220 on one surface and the printed circuit board 240 on the other surface. A processor (e.g., the processor 120 of FIG. 1), a memory (e.g., the memory 130 of FIG. 1), and/or an interface (e.g., the interface 177 of FIG. 1) may be mounted on the printed circuit board 240.

According to an embodiment, the battery 250 may be a device for supplying power to at least one component (e.g., the camera module 212) of the electronic device 200. The battery 250 may include, e.g., a primary cell which is not rechargeable, a secondary cell which is rechargeable, or a fuel cell. At least a portion of the battery 250 may be disposed on substantially the same plane as the printed circuit board 240. The battery 250 may be integrally or detachably disposed inside the electronic device 200.

According to an embodiment, the rear case 260 may be disposed between the printed circuit board 240 and the antenna 270. For example, the rear case 260 may include one surface to which at least one of the printed circuit board 240 and the battery 250 is coupled, and another surface to which the antenna 270 is coupled.

According to an embodiment, the antenna 270 may be disposed between the rear plate 280 and the battery 250. The antenna 270 may include, e.g., a near-field communication (NFC) antenna, a wireless charging antenna, and/or a magnetic secure transmission (MST) antenna. The antenna 270 may perform short-range communication with, e.g., an external device or may wirelessly transmit or receive power necessary for charging. For example, the antenna 270 may include a coil for wireless charging. According to an embodiment, an antenna structure may be formed by a portion or combination of the side bezel structure 231 and/or the bracket 232.

According to an embodiment, the electronic device 200 may include a camera module 212 disposed in the second housing (e.g., the housing 210 of FIG. 2). According to an embodiment, the camera module 212 may be disposed on the bracket 232 and may be a rear camera module (e.g., the camera module 212 of FIG. 3) capable of obtaining an image of a subject positioned behind (e.g., the -Z direction) of the electronic device 200. According to an embodiment, at least a portion of the camera module 212 may be exposed to the outside of the electronic device 200 through the opening 282 formed in the rear plate 280.

The electronic device 200 disclosed in FIGS. 2 to 4 has a bar-type or plate-type appearance but the disclosure is not limited thereto. For example, the illustrated electronic device may be a rollable electronic device or a foldable electronic device. "Rollable electronic device" may refer, for example, to an electronic device at least a portion of which may be wound or rolled or received in a housing (e.g., the housing 210 of FIG. 2) as the display (e.g., the display 220 of FIG. 4) may be bent and deformed. As the display is stretched out or is visible to the outside in a larger area according to the user's need, the rollable electronic device may use an expanded second display area.

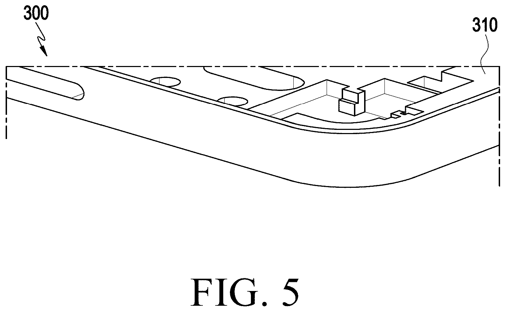

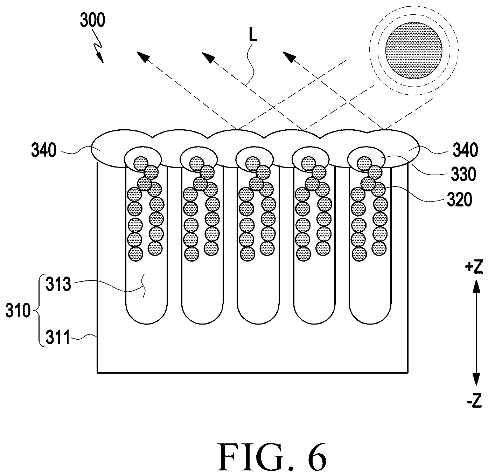

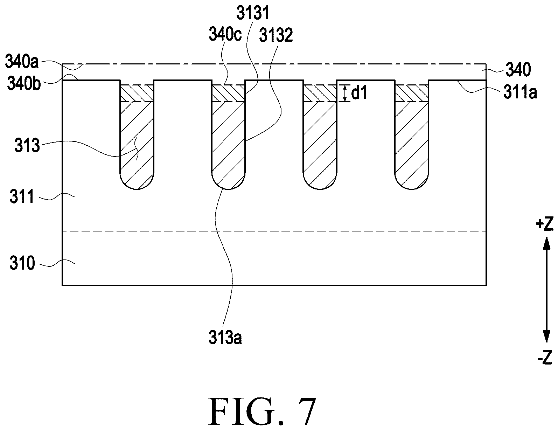

FIG. 5 is an enlarged perspective view illustrating a portion of a housing according to various embodiments. FIG. 6 is a diagram illustrating an example structure of a housing according to various embodiments. FIG. 7 is a diagram illustrating an example structure of a housing according to various embodiments.

Referring to FIG. 5, FIG. 6, and/or FIG. 7, the housing 300 may include a metal member 310, a dye 320, a UV blocker 330, and/or a sealing layer 340.

According to an embodiment, the housing 300 may form at least a portion of the exterior of the electronic device (e.g., the electronic device 200 of FIG. 2). For example, the housing 300 of FIGS. 5, 6, and/or 7 may be identical in whole or in part to the configuration of the housing 210 of FIG. 2, the rear plate 211 of FIG. 3, and/or the side bezel structure 231 of FIG. 4.

According to an embodiment, the housing 300 may include a metal member 310. The metal member 310 may be a material (e.g., a metal material) on which an oxide film 311 may be formed by an anodizing process. For example, the metal member 310 may include at least one of aluminum, magnesium, or titanium. The metal member 310 may not include steel or stainless steel. According to an embodiment, the shape of the housing 300 and/or the metal member 310 may be formed by a cutting process and/or a polishing process.

According to an embodiment, the metal member 310 may include an oxide film 311. The oxide film 311 may be referred to as a portion of the oxidized metal member 310 of the metal member 310. According to an embodiment, the oxide film 311 may be formed by an anodizing process. Through the anodic oxidation process, the thickness of the oxidized portion of the metal member 310 may be increased. The oxide film 311 may enhance wear resistance, corrosion resistance, and/or aesthetics of the metal member 310.

According to an embodiment, the oxide film 311 may include voids 313. For example, the oxide film 311 may have a porous surface. The voids 313 may be referred to as a plurality of pores or a plurality of recesses formed in the oxide film 311. According to an embodiment, the void 313 may be a recess formed in a substantially cylindrical shape in the oxide layer 311. The shape of the void 313 is merely a non-limiting example. For example, the void 313 may have various shapes (e.g., a rectangular column, etc.) other than a cylindrical shape.

According to an embodiment, the dye 320 and the UV blocker 330 may be deposited on the oxide film 311 of the metal member 310. For example, the void 313 may receive the dye 320 and the UV blocker 330. Particles of the dye 320 and particles of the UV blocker 330 may be positioned within the voids 313 of the oxide film 311. For example, the void 313 may relatively have + (e.g., positive) charge, and the particles may have - (e.g., negative) charge. The void 313 may suction particles having - (e.g., negative) polarity.

According to an embodiment, the housing 300 may include the dye 320. The dye 320 may impart a color to the housing 300 and/or the electronic device (e.g., the electronic device 200 of FIG. 2). For example, the color of the housing 300 may be implemented by reflecting light of a predetermined (e.g., specified) wavelength band from the housing 300. The dye 320 may reflect light of a designated wavelength according to its type. The color of the housing 300 may be realized by the dye 320.

According to an embodiment, the dye 320 may include a natural dye. For example, the dye 320 may be a pigment obtained from plants, animals, or minerals. For example, the dye 320 of the disclosure may be a dye natural material extracted by salt ash extraction, hydrothermal extraction, raw juice extraction, and/or alkaline extraction. According to an embodiment, use of a natural dye may decrease harm to body and environmental contamination. Natural dyes may provide aesthetics different from synthetic dyes by containing ancillary components.

According to an embodiment, the dye 320 may be deposited on the metal member 310. For example, the dye 320 may be positioned within the void 313 of the oxide film 311. According to an embodiment, the dye 320 may be covered by the sealing layer 340. As the dye 320 is protected by the sealing layer 340, discoloration of the dye 320 may be reduced.

According to an embodiment, the housing 300 may include the UV blocker 330. The UV blocker 330 may reduce color change of the housing 300. According to an embodiment, the molecular structure of the dye 320 may be changed by light (e.g., ultraviolet light) L. As the molecular structure of the dye 320 is changed, the wavelength of the reflected light and/or the wavelength of the light absorbed by the dye 320 is changed, and the color of the housing 300 may be changed. For example, photochromism may occur. The UV blocker 330 may reduce changes in the molecular structure of the dye 320. According to an embodiment, natural dyes may have unstable properties as compared to synthetic dyes. For example, natural dyes may be easily discolored by ultraviolet light. The UV blocker 330 may reduce discoloration of natural dyes.

According to an embodiment, the UV blocker 330 may include a physical UV blocker. For example, the UV blocker 330 may reflect at least a portion of light (e.g., ultraviolet light) L. According to an embodiment, the UV blocker 330 may be a metal-based compound. For example, the UV blocker 330 may include at least one of zirconium (Zr), zinc (Zn), titanium (Ti), boron (B), or phosphorus (P). According to an embodiment, the UV blocker 330 may include at least one of zirconium dioxide, zinc oxide, or titanium dioxide.

According to an embodiment, the UV blocker 330 may include a chemical UV blocker. For example, the UV blocker 330 may convert at least a portion of light (e.g., ultraviolet light) L into thermal energy. According to an embodiment, the UV blocker 330 may include at least one of oxybenzone, ethylhexylmethoxycinnamate, octylmetholcinnamate, avobenzone, octinoxate, or octocryl.

According to an embodiment, the UV blocker 330 may be deposited on the metal member 310. For example, the UV blocker 330 may be positioned within the void 313 of the oxide film 311. According to an embodiment, the UV blocker 330 may be covered by the sealing layer 340. As the UV blocker 330 is protected by the sealing layer 340, damage or delamination of the UV blocker 330 may be reduced.

According to an embodiment, the housing 300 may include the sealing layer 340. The sealing layer 340 may seal the dye 320 and/or the UV blocker 330. For example, the sealing layer 340 may be positioned on the oxide film 311 (in the +Z direction). According to an embodiment, the sealing layer 340 may include an expansion surface 340c expanded from the oxide film 311. The expansion surface 340c may close at least a portion of the void 313.

According to an embodiment, the sealing layer 340 may form at least a portion of the surface of the housing 300. For example, the sealing layer 340 may include a rear surface 340b positioned on the first surface 311a of the oxide film and a surface 340a opposite to the rear surface 340b and forming at least a portion of the exterior of the housing 300.

According to an embodiment, the sealing layer 340 may be referred to as a portion of the metal member 310. For example, the sealing layer 340 is formed by a sealing process and may be a portion of the metal member 310 closing the void 313. The sealing layer 340 may cover at least a portion of the void 313. According to an embodiment, the sealing layer 340 may be a portion of the metal member 310 formed by being expanded from at least a portion of the first surface 311a of the oxide film 311. According to an embodiment, the oxygen concentration of the sealing layer 340 may be greater than that of the metal member 310.

According to an embodiment, the sealing layer 340 may be formed on the housing 300 based on a hydration sealing treatment, a metal salt sealing treatment, an organic sealing treatment, and/or a sealing treatment using painting.

According to an embodiment, the dye 320 and the UV blocker 330 may be positioned within the void 313. According to an embodiment, the UV blocker 330 may be mixed with the dye 320 and be positioned in the void 313. For example, the dye 320 and the UV blocker 330 may be mixed and positioned in the void 313.

According to an embodiment, the void 313 may include a first area 3131 and a second area 3132. The first area 3131 may be a portion of the void 313 adjacent to the surface of the housing 300. For example, the first area 3131 may be positioned under the sealing layer 340 (in the -Z direction). The first area 3131 may be covered by the sealing layer 340. The second area 3132 may be positioned under the first area 3131. The second area 3132 may be an empty space extending from the first area 3131. For example, the first area 3131 and the second area 3132 may be a single connected empty space.

According to an embodiment, the ratio of the dye 320 and the UV blocker 330 may be different depending on the position of the void 313. When a material including particles is deposited in the void 313 of the oxide film 311, the position of the material may be changed depending on the size of the particle. For example, as the particle size of the material deposited in the void 313 increases, it may be deposited adjacent to the surface of the oxide film 311 and/or the oxide film 311.

According to an embodiment, in order for the UV blocker 330 to reflect ultraviolet rays, the particle size of the UV blocker 330 may be larger than the particle size of the dye 320. The ratio of the UV blocker 330 to the dye 320 may increase as it approaches the outside of the void 313 and/or the housing 300. For example, the ratio of the UV blocker 330 to the dye 320 in the first area 3131 may be higher than the ratio of the UV blocker 330 to the dye 320 in the second area 3132.

According to an embodiment, the dye 320 may be substantially uniformly distributed in the void 313. The UV blocker 330 may be non-uniformly distributed in the void 313. For example, the concentration of the UV blocker 330 increases as it approaches the front surface 311a of the oxide film 311, and the concentration may decrease as it approaches the lower surface 313a of the void 313.

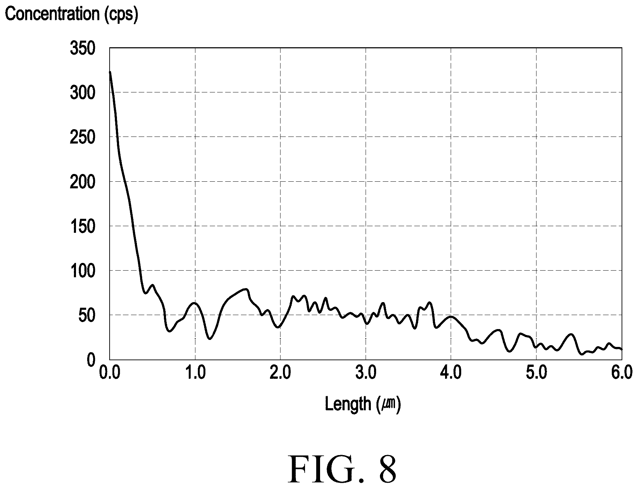

FIG. 8 is a graph illustrating the concentration of a UV blocking agent which is changed depending on the position according to various embodiments.

Referring to FIG. 8, the concentration of UV blocking components in the UV blocker 330 may change based on the depth of the surface (e.g., the front surface 311a of the oxide film 311 and/or the surface 340a of the sealing layer 340 in FIG. 8) of the housing 300.

The concentration of ultraviolet 330 in FIG. 8 may be the concentration of the UV blocking components (e.g., zirconium, zinc, titanium, boron, and/or phosphorus) of the ultraviolet 330 as identified by cross-sectional scanning electron microscopy (SEM)/energy dispersive spectrometer (EDS) analysis.

According to an embodiment, for example, in the graph of FIG. 8, the concentration of the UV blocking component of the UV blocker 330 may be the concentration of zirconium (Zr) detected in the housing 300, which includes 330 ng/ml of zirconium dioxide (ZrO₂). A concentration of 100 counts per second (cps) or more may be detected, as the concentration of the UV blocking component, in the area from the surface (e.g., the front surface 311a of the oxide film 311 or the surface 340a of the sealing layer 340) of the housing 300 to a depth of about 1*µ*m for the UV blocker 330. That the concentration of the UV blocking component is 100cps or more in the area from the surface (e.g., the front surface 311a of the oxide film 311 or the surface 340a of the sealing layer 340) of the housing 300 to a depth of about 1*µ*m may be referred to as the UV blocking component of the UV blocker 330 being detected as having a concentration of 100cps or more in the area.

In an embodiment, the concentration of the UV blocking component of the UV blocker 330 in the area from the surface (e.g., the front surface 311a of the oxide film 311 or the surface 340a of the sealing layer 340) of the housing 300 to a designated depth (e.g., 0.3*µ*m) may be identified as being 100 counts per second (cps) or more.

As the UV blocker 330 has a concentration of 100cps or more in the above-described range, discoloration of the dye 320 may be reduced.

According to an embodiment, a portion of the housing 300 from the surface (e.g., the front surface 311a of the oxide film 311 or the surface 340a of the sealing layer 340) of the housing 300 to a depth of about 1*µ*m may be the first area 3131 of FIG. 7. For example, the first area 3131 may be an area from the entrance of the void 313 toward the surface of the housing 300 to a depth of 1*µ*m. According to an embodiment, the first length d1 of the first area 3131 may be about 1*µ*m. The UV blocker 330 may have a concentration of 100 cps or more in the first area 3131. The entrance of the void 313 may be the front surface 311a of the oxide film or the expansion surface 340c of the sealing layer 340.

FIG. 8 illustrates a graph in which the UV blocker 330 is zirconium dioxide, but the type of the UV blocker 330 is not limited thereto. For example, in an embodiment, the UV blocker 330 may be zinc oxide (ZnO), and the concentration of zinc (Zn) may be 100cps or more in the area from the surface (e.g., the front surface 311a of the oxide film 311 or the surface 340a of the sealing layer 340) of the housing 300 to a depth of about 1*µ*m. For example, in an embodiment, the UV blocker 330 may be titanium dioxide (TiO₂), and the concentration of titanium (Ti) may be 100cps or more in the area from the surface (e.g., the front surface 311a of the oxide film 311 or the surface 340a of the sealing layer 340) of the housing 300 to a depth of 1*µ*m.

In an embodiment, the UV blocker 330 may be a boron (B)-based compound. The concentration of boron (B) may be 100cps or more in the area from the surface (e.g., the front surface 311a of the oxide film 311 or the surface 340a of the sealing layer 340) of the housing 300 to a depth of 1*µ*m.

In an embodiment, the UV blocker 330 may be a phosphorous (P)-based compound. The concentration of phosphorous (P) may be 100cps or more in the area from the surface (e.g., the front surface 311a of the oxide film 311 or the surface 340a of the sealing layer 340) of the housing 300 to a depth of 1*µ*m.

In an embodiment, the UV blocker 330 may be a chemical UV blocker, and the concentration of the component for blocking ultraviolet rays among the components of the chemical UV blocker may be 100cps in the area from the surface (e.g., the front surface 311a of the oxide film 311 or the surface 340a of the sealing layer 340) of the housing 300 to a depth of about 1*µ*m.

The graph of FIG. 8 may be a graph for describing the concentration of the UV blocker 330 of the housing 300 of FIGS. 6 and/or 7.

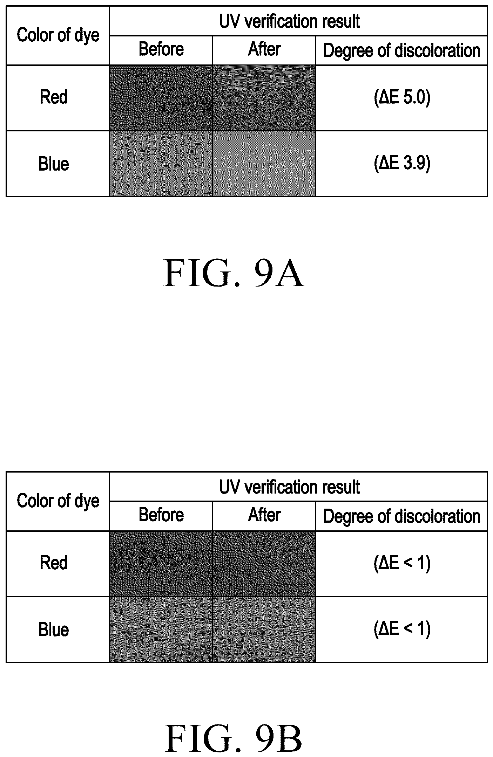

FIGS. 9A and 9B are diagrams illustrating a result of UV verification of a housing according to various embodiments.

According to an embodiment, the degree of discoloration of the housing (e.g., the housing 300 of FIG. 5) may be determined based on whether the UV blocker 330 is present. For example,

FIG. 9A illustrates a UV verification result of the housing 300 that does not include the UV blocker 330, according to an embodiment of the disclosure. FIG. 9B illustrates a UV verification result of a housing 300 including a UV blocker 330, according to an embodiment of the disclosure. For example, in FIGS. 9A and 9B, the UV verification result may be a result obtained by receiving UV light from a UV lamp having a wavelength of about 340nm under designated experimental conditions (e.g., 50 degrees and 40 hours).

The degree of discoloration may be determined by the CIE chrominance formula. The CIE chrominance formula is a formula defined to approximate the color discrimination zone of the human eye on the CIE LAB color space. For example, the CIE chrominance formula may be a CIEDE2000 formula. The chrominance value △E may be determined using correction of the weighting factor and/or parametric factor, based on the brightness difference, saturation difference, and color difference. According to an embodiment, the chrominance value △E may refer, for example, to a difference between the color before irradiation with UV light and the color after irradiation with UV light.

Referring to FIGS. 9A and 9B, the degree of discoloration of the housing 300 including the dye 320 and the UV blocker 330 may be smaller than the degree of discoloration of the housing 300 including the dye 320 but not including the UV blocker 330. For example, referring to FIG. 9A, the chrominance value △E of a housing using a red dye may be about 5.0, and the chrominance value △E of a housing using a blue dye may be about 3.9. When the chrominance value △E is less than about 5.0, the user may identify the color change. Referring to FIG. 9A, the chrominance value △E of a housing using a red dye may be less than 1.0, and the chrominance value △E of a housing using a blue dye may be less than 1.0. When the chrominance value △E is less than 1.0, the user may perceive the color change as blurry. For example, the lower the chrominance value △E, the harder it may be for the user to identify the color change.

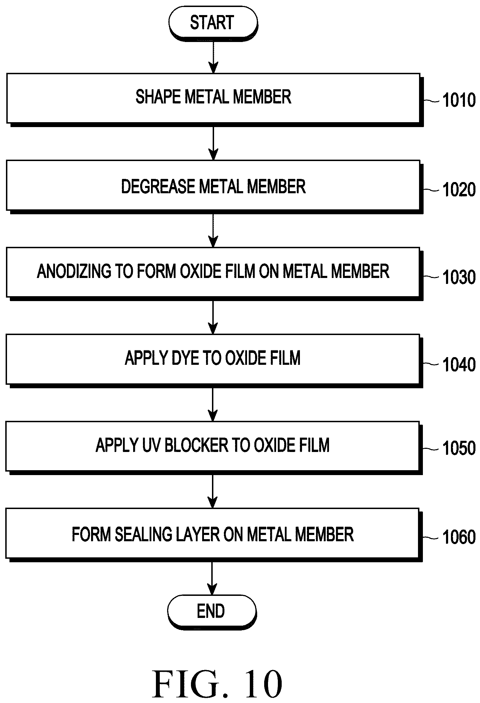

FIG. 10 is a flowchart illustrating an example method for manufacturing a housing according to various embodiments.

Referring to FIG. 10, a method for manufacturing a housing may include a process 1010 of shaping a metal member, a process 1020 of degreasing the metal member, an anodizing process 1030 of forming an oxide film on the metal member, a process 1040 of applying a dye to the oxide film, a process 1050 of applying a UV blocker to the oxide film, and/or a process 1060 of forming a sealing layer on the metal member.

The method for manufacturing the housing of FIG. 10 may be a process for manufacturing the housing 300 described in connection with FIGS. 5, 6, and 7. For example, the metal member, oxide film, dye, UV blocker, and sealing layer described in connection with FIG. 10 may be identical in whole or part to the configuration of the metal member 310, oxide film 311, dye 320, UV blocker 330, and sealing layer 340 of FIGS. 6 and/or 7.

According to an embodiment, the process 1010 of shaping the metal member may be a process of shaping a metal (e.g., aluminum, magnesium, and/or titanium). For example, the process of shaping the metal member may include a press, casting, and/or cutting process. The process of shaping the metal member may include polishing and/or forming a surface bend.

According to an embodiment, the process 1020 of degreasing the metal member may be a surface treatment process of the metal member. According to an embodiment, the process 1020 of degreasing the metal member may remove the foreign body (e.g., cutting fluid used in the machining process and/or polishing compound used in the polishing process) generated by the process 1010 of shaping the metal member. According to an embodiment, the process 1020 of degreasing the metal member may remove the oxide film of the metal member oxidized in the air. For example, the process 1020 of degreasing the metal member may remove the oxide film on the metal member and/or foreign body attached to the metal member by an organic solvent method, a surfactant method, or an acid degreasing method. The organic solvent method may be a surface treatment method using benzene and ethylene. The surfactant method may be a surface treatment method using a neutral detergent and/or synthetic detergent. The acid degreasing method may be a surface treatment method using sulfuric acid and/or nitric acid.

According to an embodiment, the anodizing process 1030 of forming the oxide film on the metal member is a process of immersing the metal member in an electrolyte solvent and then applying an electric current to form an oxide film on the surface of the metal member. In an embodiment, the electrolyte solvent may include at least one of sulfuric acid, oxalic acid, oxalic acid, or chromic acid. The voltage used for applying the current may be about 5V to 100V. The process time of the anodizing process 1030 may be about 10 minutes to 3 hours. The process temperature of the anodizing process 1030 may be about 0°C to about 50°C. According to an embodiment, the oxide film (e.g., the oxide film 311 of FIG. 6) generated in the anodizing process 1030 may include at least one void (e.g., the void 313 of FIG. 6).

According to an embodiment, the process 1010 of shaping the metal member, the process 1020 of degreasing the metal member, and/or the anodizing process 1030 of forming the oxide film on the metal member may be referred to as processes of preparing the metal member having an oxide film. In an embodiment, at least some of the processes of preparing the metal member may be performed together with the process 1040 of applying a dye to the oxide film, the process 1050 of applying a UV blocker to the oxide film, and the process 1060 of forming a sealing layer on the metal member. In an embodiment, the entity performing the processes of preparing the metal member may be different from the entity performing the process 1040 of applying a dye to the oxide film, the process 1050 of applying the UV blocker to the oxide film, and the process 1060 of forming the sealing layer on the oxide film.

According to an embodiment, the process 1040 of applying a dye to the oxide film may be referred to as a coloring process. For example, the process 1040 of applying a dye to the oxide film may be a process of applying a dye (e.g., natural dye) to the void (e.g., the void 313 of FIG. 6) formed in the oxide film.

In an embodiment, the process 1040 of applying a dye to the oxide film may implement a color of the oxide film using an immersion method. For example, the process 1040 of applying a dye to the oxide film may prepare a dye dissolved in a solution, immerse the oxide film-formed metal member in the solution, and implement a color of the oxide film with the diffused and adsorbed dye.

According to an embodiment, the process 1050 of applying a UV blocker to the oxide film may be a process of applying a UV blocker (e.g., the UV blocker 330 of FIG. 6) to the void formed in the oxide film.

According to an embodiment, the concentration of the UV blocker used in the process 1050 of applying a UV blocker to the oxide film may be selected to reduce poor sealing (e.g., formation of a seal layer (e.g., the seal layer 340 of FIG. 6)), the development of stains, or non-coloring or whitening. For example, the concentration of the UV blocker may be 1 ng/ml to 500 ng/ml. When the concentration of the UV blocker exceeds 500 ng/ml, at least a portion of the UV blocker is not positioned in the void but may aggregate on the void.

For example, when the concentration of the UV blocker is a range of 1 ng/ml to 500 ng/ml, the chrominance value of the housing including the UV blocker and the dye (e.g., natural dye) may be less than 1. When the concentration of the UV blocker 330 exceeds 500 ng/ml, at least a portion of the UV blocking component is not positioned in the void, resulting in poor sealing (e.g., formation of a sealing layer (e.g., the sealing layer 340 of FIG. 6)), the development of stains, or non-coloring or whitening in at least a portion of the housing. When the concentration of the UV blocker is less than 1 ng/ml, the effect of preventing and/or reducing discoloration of the dye by the UV blocker may be substantially absent. The concentration of the UV blocker may be referred to as the concentration of the UV blocking component of the UV blocker.

According to an embodiment, the order of the process 1040 of applying a dye to the oxide film and the process of applying a UV blocker to the oxide film may be changed according to design. According to an embodiment, the process 1050 of applying a UV blocker to the oxide film may be performed together with the process 1040 of applying a dye to the oxide film. According to an embodiment, the process 1050 of applying a UV blocker to the oxide film may be performed after the process 1040 of applying a dye to the oxide film.

According to an embodiment, the process 1060 of forming the sealing layer on the metal member may be a process of closing the void of the oxide film. For example, damage to the dye 320 and the UV blocker 330 positioned inside the void may be reduced by the process 1060 of forming the sealing layer.

According to an embodiment, the process 1060 of forming the sealing layer on the metal member may be a metal salt treatment method, a non-metal salt treatment method, or a hydration sealing treatment method using water and steam.

According to an embodiment, the method 1000 for manufacturing the housing may include an elution process 1060 for removing metal salts or a hot water wash process for cleaning foreign bodies after the process 1060 of forming the sealing layer on the metal member.

There is a growing design need to improve the aesthetics of electronic devices. For example, the electronic device may include a housing that uses natural dyes to achieve different colors. However, natural dyes may be discolored by UV light. If a legume-based sealant is used to prevent and/or reduce discoloration of the natural dye, the manufacturing process of the sealant may be complex and reduce mass production. The UV blocker post-processed on the finished surface may be damaged by external stimuli (e.g., scratches), and the persistence of the UV blocker may be reduced.

According to an embodiment of the disclosure, there may be provided a housing including a UV blocker for reducing discoloration of natural dyes.

According to an embodiment of the present disclosure, there may be provided a housing including a UV blocker that is disposed in a designated position in the void to reduce deterioration of the sealing layer, the development of stains, and non-coloring or whitening.

The disclosure is not limited to the foregoing embodiments but various modifications or changes may rather be made thereto without departing from the spirit and scope of the disclosure.

According to an example embodiment of the disclosure, a housing (e.g., the housing 300 of FIG. 5) may comprise: a metal member comprising a metal material (e.g., the metal member 310 of FIG. 6) including an oxide film (e.g., the oxide film 311 of FIG. 6) having a void (e.g., the void 313 of FIG. 6), a dye (e.g., the dye 320 of FIG. 6) disposed in the void, an ultraviolet (UV) blocker (e.g., the UV blocker 330 of FIG. 6) comprising a UV blocking material disposed in the void, and a sealing layer (e.g., the sealing layer 340 of FIG. 6) positioned on the oxide film. The void may include a first area (e.g., the first area 3131 of FIG. 7) positioned under the sealing layer and a second area (e.g., the second area 3132 of FIG. 7) positioned under the first area. A ratio of the UV blocker to the dye in the first area may be greater than a ratio of the UV blocker to the dye in the second area. As the UV blocker is disposed in the void, discoloration of the dye may be reduced. As the sealing layer is positioned on the oxide film, durability of the UV blocker may be increased.

According to an example embodiment, in the first area, a concentration of a UV blocking component of the UV blocker may be 100cps or more. For example, the concentration of the UV blocking component of the UV blocker may be detected as 100cps or more.

According to an example embodiment, a particle size of the UV blocker may be larger than a particle size of the dye. As the particle size of the UV blocker is larger than the particle size of the dye, a ratio of the UV blocker to the dye in the first area may be greater than a ratio of the UV blocker to the dye in the second area.

According to an example embodiment, the oxide film may form at least a portion of a surface of the metal member. The void may include a plurality of recesses formed in the oxide film.

According to an example embodiment, an oxygen concentration of the sealing layer may be greater than an oxygen concentration of the oxide film.

According to an example embodiment, the first area includes an empty space from an entrance of the void up to 1*µ*m in a depth direction of the housing.

According to an example embodiment, the concentration of the UV blocker may be in a range of 1 ng/ml to 500 ng/ml. Due to the concentration of the UV blocker, poor sealing, development of stains, non-coloring or whitening may be reduced.

According to an example embodiment, the dye may include a natural dye. Using the natural dye, the aesthetics of the housing may be increased.

According to an example embodiment, the UV blocker may include at least one of zirconium, zinc, titanium, boron or phosphorus.

According to an example embodiment, the UV blocker may include at least one of oxybenzone, ethylhexylmethoxycinnamate, octylmetholcinnamate, avobenzone, octinoxate, or octocryl.

According to an example embodiment, the metal member may include at least one of aluminum, magnesium, or titanium.

According to an example embodiment of the disclosure, an electronic device (e.g., the electronic device 200 of FIG. 2) may comprise: a housing (e.g., the housing 210 of FIG. 2) and a processor (e.g., the processor 120 of FIG. 1) positioned in the housing. The housing (e.g., the housing 300 of FIG. 5) may comprise: a metal member comprising a metal material (e.g., the metal member 310 of FIG. 6) including an oxide film (e.g., the oxide film 311 of FIG. 6) having a void (e.g., the void 313 of FIG. 6), a dye (e.g., the dye 320 of FIG. 6) disposed in the void, an ultraviolet (UV) blocker (e.g., the UV blocker 330 of FIG. 6) disposed in the void, and a sealing layer (e.g., the sealing layer 340 of FIG. 6) positioned on the oxide film. The void may include a first area (e.g., the first area 3131 of FIG. 7) positioned under the sealing layer and a second area (e.g., the second area 3132 of FIG. 7) positioned under the first area. A ratio of the UV blocker to the dye in the first area may be greater than a ratio of the UV blocker to the dye in the second area.

According to an example embodiment, the housing may include a bracket (e.g., the bracket 231 and/or the side bezel structure 231 of FIG. 4) forming at least a portion of a side surface of the electronic device and a rear plate (e.g., the rear plate 280 of FIG. 4) forming at least a portion of a rear surface of the electronic device.

According to an example embodiment, the electronic device may further comprise a display (e.g., the display 220 of FIG. 4) disposed on one surface of the bracket and a printed circuit board (e.g., the circuit board 240 of FIG. 4) disposed on another surface of the bracket and receiving the processor.

According to an example embodiment, the housing may include a sealing layer (e.g., the sealing layer 340 of FIG. 6) protecting the UV blocker and the dye, as a sealing layer positioned on the oxide film.

According to an example embodiment, in the first area, a concentration of a UV blocking component of the UV blocker may be 100cps or more. For example, the concentration of the UV blocking component of the UV blocker may be detected as 100cps or more in the first area.

According to an example embodiment, the concentration of the UV blocking component of the UV blocker may be in a range of 1 ng/ml to 500 ng/ml.

According to an example embodiment, the dye may include a natural dye. The metal member may include at least one of aluminum, magnesium, or titanium. The UV blocker may include at least one of zirconium, zinc, titanium, boron, phosphorus, oxybenzone, ethylhexylmethoxycinnamate, octylmetholcinnamate, avobenzone, octinoxate, or octocryl.

According to an example embodiment of the disclosure, a method (e.g., the method 1000 for manufacturing a housing of FIG. 10) for manufacturing a housing may comprise: preparing (e.g., process 1010, process 1020, and/or process 1030 of FIG. 10) a metal member (e.g., the metal member 310 of FIG. 6) having an oxide film (e.g., the oxide film 311 of FIG. 6), applying (e.g., process 1040 of FIG. 10) a dye (e.g., the dye 320 of FIG. 6) to the oxide film, applying (e.g., process 1050 of FIG. 10) an ultraviolet (UV) blocker (e.g., the UV blocker 330 of FIG. 6) having a concentration in a range of 1 ng/ml to 500 ng/ml to the oxide film, and forming (e.g., process 1060 of FIG. 10) a sealing layer (e.g., the sealing layer 340 of FIG. 6) on the oxide film.

While the disclosure has been illustrated and described with reference to various example embodiments, it will be understood that the various example embodiments are intended to be illustrative, not limiting. It will be further understood by those skilled in the art that various changes in form and detail may be made without departing from the true spirit and full scope of the disclosure, including the appended claims and their equivalents. It will also be understood that any of the embodiment(s) described herein may be used in conjunction with any other embodiment(s) described herein.

## Claims

1. A housing (210 or 300) comprising:
a metal member comprising a metal material and including an oxide film having a void(313);
a dye (320) disposed inside of the void;
an ultraviolet (UV) blocker (330)including a UV light blocking material disposed inside of the void; and
a sealing layer (340) positioned on the oxide film, the sealing layer (340) configured to cover the void,
wherein the void includes a first area (3131) positioned under the sealing layer and a second area (3132) positioned under the first area, and
wherein a ratio of the UV blocker to the dye in the first area is greater than a ratio of the UV blocker to the dye in the second area.

2. The housing of claim 1, wherein in the first area, a concentration of a UV blocking component of the UV blocker is configured to be detected as 100cps or more.

3. The housing of claim 1 or 2,
wherein a particle size of the UV blocker is larger than a particle size of the dye.

4. The housing of any one of the preceding claims,
wherein the oxide film forms at least a portion of a surface (311a) of the metal member, and
wherein the void includes a plurality of recesses formed in the oxide film.

5. The housing of any one of the preceding claims,
wherein the sealing layer covers the void, and
wherein the sealing layer covers the dye and the UV blocker.

6. The housing of any one of the preceding claims, wherein an oxygen concentration of the sealing layer is greater than an oxygen concentration of the oxide film.

7. The housing of any one of the preceding claims, wherein the first area includes an empty space extending from an entrance of the void to a depth of 1*µ*m in a depth direction of the housing.

8. The housing of any one of the preceding claims, wherein a concentration of a UV blocking component in the UV blocker is in a range of 1ng/ml to 500ng/ml.

9. The housing of any one of the preceding claims, wherein the dye includes a natural dye.

10. The housing of any one of the preceding claims, wherein the UV blocker includes at least one of zirconium, zinc, titanium, boron or phosphorus.

11. The housing of any one of the preceding claims, wherein the UV blocker includes at least one of oxybenzone, ethylhexylmethoxycinnamate, octylmetholcinnamate, avobenzone, octinoxate, or octocryl.

12. The housing of any one of the preceding claims, wherein the metal member includes at least one of aluminum, magnesium, or titanium.

13. An electronic device (101 or 200) comprising:
a housing (210 or 300); and
a processor (120) positioned in the housing,
wherein the housing includes:
a metal member (310)comprising a metal material and including an oxide film (311) including having a void (313),
a dye (320) disposed inside of the void and
a UV blocker (330)comprising a UV light blocking material disposed inside of the void,
wherein the void includes a first area (3131) adjacent to a surface of the housing and a second area (3132) positioned under the first area, and
wherein a ratio of the UV blocker to the dye in the first area is greater than a ratio of the UV blocker to the dye in the second area.

14. The electronic device of claim 13, wherein the housing includes a sealing layer (340) configured to protect the UV blocker and the dye, wherein the sealing layer is disposed on the oxide film.

15. A method (1000) for manufacturing a housing comprising:
preparing (1010, 1020, and 1030) a metal member (310) including an oxide film (311);
applying (1040) a dye (320) to the oxide film;
applying (1050) a UV blocker (330) having a concentration in a range of 1ng/ml to 500ng/ml to the oxide film; and
forming (1060) a sealing layer (340) on the oxide film.
